# EUROPÄISCHE PATENTSCHRIFT

(11) **EP 4 001 858 B1**
(45) Veröffentlichungstag und Bekanntmachung des Hinweises auf die Patenterteilung: **08.03.2023**
(21) Anmeldenummer: 21199472.8
(22) Anmeldetag: 28.09.2021
(51) Int. Cl.: G01F 23/26

(54) **VERFAHREN ZUM BETREIBEN EINES MESSSYSTEMS ZUR KAPAZITIVEN FÜLLSTANDSMESSUNG**
METHOD FOR OPERATING A MEASURING SYSTEM FOR CAPACITIVE LEVEL MEASUREMENT
PROCÉDÉ DE FONCTIONNEMENT D'UN SYSTÈME DE MESURE DESTINÉ À LA MESURE CAPACITIVE DE NIVEAU DE REMPLISSAGE

(30) Priorität: 12.11.2020 DE 102020129861
(43) Veröffentlichungstag der Anmeldung: 25.05.2022
(73) Patentinhaber: Pepperl+Fuchs SE, 68307 Mannheim (DE)
(72) Erfinder: Vater, Jochen, 68623 Lampertheim (DE)
(74) Vertreter: Banse & Steglich Patentanwälte PartmbB

(56) Entgegenhaltungen:
- EP-A1- 3 594 638
- WO-A1-01/29520
- WO-A1-2019/011595
- DE-A1-102005 057 558
- DE-A1-102011 003 158
- DE-A1-102015 211 055
- DE-A1-102016 214 387

## Beschreibung

### Technisches Gebiet

Die Erfindung betrifft kapazitive Füllstandssensoren für flüssige Medien, insbesondere mit starker Verschmutzung. Die Erfindung betrifft weiterhin Maßnahmen zur Erhöhung der Zuverlässigkeit der Füllstandserkennung eines Füllstandssensors gegenüber Schmutzablagerung.

### Technischer Hintergrund

Mit einem Füllstandssensor kann der Füllstand einer Flüssigkeit in einem Behälter erfasst werden. Ein Füllstandssensor kann auf einem kapazitiven Messprinzip basieren. Bei einem kapazitiven Füllstandssensor ist eine Messelektrode vorgesehen, die zu einem Bezugspotenzial durch den Inhalt des Behälters eine Kapazität ausbildet.

Die Kapazität zwischen der Messelektrode und Bezugspotenzial hängt von der Menge des flüssigen Mediums in dem Behälter und weiterhin von festen Parametern ab, insbesondere von der Geometrie der Messelektrode, dem Material, der Form und der Dicke einer Behälterwand über der Messelektrode zur Vermeidung eines direkten Kontakts der Flüssigkeit im Behälter mit der Messelektrode, dem Abstand zwischen Sonde und Bezugspotenzial, dem Ort der Anordnung der Messelektrode an dem Behälter und den dielektrischen Eigenschaften des in dem Behälter befindlichen Mediums.

Bei Änderung eines Füllstands des Mediums in dem Behälter ändert sich die Kapazität zwischen der Messelektrode und dem Bezugspotenzial. Insbesondere weisen einige flüssige Medien eine hohe Dielektrizitätszahl gegenüber Luft oder anderen Gasen auf, so dass bei Erreichen eines Füllstands des Mediums in Höhe der Sonde des Füllstandssensors ein signifikanter Anstieg der Kapazität erfasst werden kann.

Der Füllstandssensor kann beispielsweise einen (oder mehrere) Schaltsensor(en) umfassen, der bei Erreichen eines bestimmten Füllstandsniveaus ein entsprechendes Ausgangssignal umschaltet. Insbesondere wird bei hoher Kapazität ein mit flüssigem Medium gefüllter Behälter und bei niedriger Kapazität ein geringerer Füllstand signalisiert.

Verschmutzungen in flüssigen Medien oder das flüssige Medium selbst können insbesondere bei häufig wechselnden Füllständen an der Behälterwand anhaften und die durch die Messelektrode gemessene Kapazität maßgeblich beeinflussen. Je größer die Dielektrizitätszahl und/oder die Leitfähigkeit der Anhaftung, desto größer erscheint die Kapazität, die zwischen der Messelektrode und dem Bezugspotenzial aufgrund der Anhaftung wirkt. Je nach Empfindlichkeitseinstellung des Füllstandssensors kann demnach eine Anhaftung an der Behälterwand dazu führen, dass eine hohe Kapazität gemessen wird, obwohl der Flüssigkeitsstand einem geringen Füllstand entspricht. Mit anderen Worten, Anhaftungen stellen dann ein Problem dar, wenn der Flüssigkeitsstand niedrig ist und aufgrund der Anhaftung eine hohe Kapazität gemessen wird, wodurch es zu einer Fehlerkennung eines hohen Füllstandes im Behälter kommt.

Aus der Druckschrift DE 10 2016 214 387 A1 ist ein Verfahren zum Betreiben eines kapazitiven Füllstandsgrenzschalters bekannt, bei dem eine an einer Außenwand des Behälters vorgesehene Elektrode die komplexe Impedanz bei einer Frequenz misst. Um Anhaftungen auszuschließen, wird der Realwertabstand in der Impedanzebene zwischen dem gemessenen Impedanzwert und einem Referenzwert, der einem Füllzustand des Behälters zugeordnet ist und den gleichen Imaginärteil aufweist, ermittelt. Zusätzlich wird der Betrag der komplexen Impedanz bestimmt, und ein Schaltsignal wird nur generiert, wenn der Realwertabstand kleiner als ein vorgegebener Schwellenwert und der Betrag der komplexen Impedanz kleiner als ein weiterer vorgegebener Schwellenwert ist. Die Grenzwerte müssen dabei in einem Einlernschritt eingelernt werden, so dass je nach Parameter des Messsystems ein neuer Einlernschritt notwendig ist.

Aus der Druckschrift DE 10 2015 211 055 A1 ist ein Verfahren zum Betreiben eines kapazitiven Füllstandsgrenzschalters für wässrige Lösungen in einem aus einem nichtleitenden Material bestehenden Tank, der an der Außenwand des Tanks montierbar ist, vorgesehen. Eine mit einer Messelektrode verbundene Messschaltung ermittelt den Betrag und die Phase der elektrischen Admittanz zwischen der Messelektrode und der Umgebung, und gibt ein Schaltsignal aus, wenn folgende zwei Bedingungen erfüllt sind: der Betrag der Admittanz muss größer als ein vorgegebener Grenzwert sein und der Phasenwinkel muss größer als ein vorgegebener Grenzwinkel sein.

Es besteht eine Schwierigkeit darin, eine bei einem leeren Behälter an der Innenwand verbleibende Anhaftung von einem gefüllten Behälter unterscheiden zu können. Dies ist insbesondere dann schwierig, wenn die Behälterform, die Behälterwanddicke und das Behältermaterial nicht genau bekannt sind und die Anhaftung stark leitfähig ist. Somit haben bekannte Verfahren den Nachteil, dass die Messsysteme für eine Füllstandsmessung, die auch Anhaftungen erkennen, an die Art des Behälters angepasst bzw. kalibriert werden müssen, um Fehlerkennungen zu vermeiden bzw. Anhaftungen zu erkennen.

Die Druckschrift WO 01/29520 A1 offenbart einen Sensor mit einem Verstärker, der durch einen Behälter und ein darin enthaltenes Medium kapazitiv gegen Masse belastet ist und der eine kapazitive Rückkopplung aufweist, die so dimensioniert ist, dass der Verstärker dann und nur dann oszilliert, wenn der kritische Füllstand nicht erreicht ist. Die kapazitive Rückkopplung wird durch den Behälter so beeinflusst, dass die durch den Behälter allein verursachte kapazitive Belastung des Verstärkereingangs entgegengewirkt wird. Hierdurch wird erreicht, dass der Sensor weitgehend unabhängig von der Größe der Behälterkapazität allein auf die Kapazität des Mediums anspricht.

Die Druckschrift EP 3 594 638 A1 offenbart eine Vorrichtung zur kapazitiven Schaumdetektion in Flüssigkeitsbehältern mit einem Sensor mit einer Messelektrode, einer leitenden Bodenplatte, einer Sensorelektronikeinheit, welche mit der Messelektrode und der Bodenplatte zum Bestimmen einer Impedanz verbunden ist. Die Messelektrode ist im Wesentlichen senkrecht zur Bodenplatte angeordnet ist. Die Sensorelektronikeinheit umfasst einen Signalgenerator, mit welchem ein erstes Signal zum Anregen der Messelektrode mit einer ersten Frequenz und ein zweites Signal zum Anregen der Messelektrode mit einer zweiten Frequenz erzeugbar ist. Eine Auswerteeinheit ist ausgeführt, basierend auf der Impedanz ein Vorhandensein von Schaum im Flüssigkeitsbehälter zu detektieren.

Die Druckschrift WO 2019/011595 A1 offenbart ein Verfahren zur kapazitiven Bestimmung und/oder Überwachung zumindest einer Prozessgröße eines Mediums, wobei eine Sondenelektrode zumindest mit einem ersten elektrischen Anregesignal mit zumindest einer ersten vorgebbaren Frequenz beaufschlagt wird, ein erstes elektrisches Empfangssignal von der Sondenelektrode (5) empfangen wird, eine Messkapazität der Sondenelektrode oder der Messkapazität und eines Medien-/Ansatz-Widerstands der Sondenelektrode zumindest anhand des ersten Empfangssignals bestimmt wird, und die zumindest eine Prozessgröße anhand des Wertes für die Messkapazität bestimmt wird.

Die Druckschrift DE 10 2011 003158 A1 offenbart eine Vorrichtung zur kapazitiven Bestimmung und/oder Überwachung mindestens des Füllstands eines Mediums in einem Behälter, mit einer Sondeneinheit mit mindestens einer Sondenelektrode, und mit einer Elektronikeinheit, welche zumindest die Sondenelektrode mit einem elektrischen Sendesignal beaufschlagt, und ein elektrisches Antwortsignal von der Sondeneinheit empfängt und auswertet. Die Elektronikeinheit beaufschlagt die Sondenelektrode zumindest zeitweise mittels eines Frequenzsuchlaufs mit einem Sendesignal, welches eine Vielzahl an innerhalb eines vorgebbaren Frequenzbands liegenden, aufeinander folgenden, diskreten Frequenzen aufweist. Die Elektronikeinheit ermittelt an Hand des Frequenz-Suchlaufs eine für aktuelle Anwendungsparameter optimale Messfrequenz und bestimmt aus dem zu der optimalen Messfrequenz gehörigen Antwortsignal den Füllstand.

Die Druckschrift DE 10 2005 057 558 A1 offenbart einen Sensor zur berührungslosen Detektion des Füllstandes eines flüssigen und anhaftenden Mediums hoher Leitfähigkeit durch eine nichtmetallische Behälterwand eines Behälters. Es sind ein Impulsgenerator, welcher mit zueinander invertierten und nichtinvertierten kurzen Pulsen über zwei gleichwertige niederohmige Widerstände zwei an der Behälterwand angebrachte Elektroden ansteuert sowie ein Differenzverstärker hoher Gleichtaktunterdrückung vorgesehen, welcher einen durch den füllstandsabhängigen Impulsstrom verursachten Spannungsabfall an dem einen der beiden Widerstände abgreift und auswertet, um eine Änderung des Füllstands anzuzeigen.

Es ist Aufgabe der vorliegenden Erfindung, ein Messsystem mit einem Füllstandssensor und ein Verfahren zum Betreiben eines Füllstandssensors zur Verfügung zu stellen, der eine verbesserte Erkennungszuverlässigkeit aufweist und insbesondere Fehlerkennungen eines hohen Füllstands vermeidet bzw. deren Wahrscheinlichkeit reduziert. Ferner ist es Aufgabe der vorliegenden Erfindung, das Verfahren und das Messsystem so vorzusehen, dass keine Anpassung oder Kalibrierung an die Art, Form oder Material des Behälters notwendig ist.

### Offenbarung der Erfindung

Diese Aufgabe wird durch das Verfahren zum Betreiben eines Messsystems mit einem Füllstandssensor gemäß Anspruch 1 sowie eine Vorrichtung und eine Vorrichtung gemäß Anspruch 11 gelöst.

Weitere Ausgestaltungen sind in den abhängigen Ansprüchen angegeben.

Gemäß einem ersten Aspekt ist ein Verfahren zum Betreiben eines Messsystems gemäß Anspruch 1 vorgesehen, mit einem Füllstandssensor mit mindestens einer Messelektrode, die eine Füllstandsschwelle an einer Behälterwand eines Behälters definiert, mit folgenden Schritten:
- Messen eines ersten Kapazitätsmesswerts einer Kapazität der mindestens einen Messelektrode bezüglich eines Referenzpotentials bei einer ersten Messfrequenz;
- Messen eines zweiten Kapazitätsmesswerts einer Kapazität der mindestens einen Messelektrode bezüglich eines Referenzpotentials bei einer zweiten Messfrequenz, wobei die zweite Messfrequenz höher ist als die erste Messfrequenz,
- Signalisieren einer Anhaftung an der Behälterwand im Bereich der mindestens einen Messelektrode abhängig von dem ersten und dem zweiten Kapazitätsmesswert und einem zweiten Kapazitätsschwellenwert, der von dem ersten oder von dem zweiten Kapazitätsmesswert abhängt, wenn der zweite Kapazitätsmesswert geringer als der zweite Kapazitätsschwellenwert ist und wenn der erste Kapazitätsmesswert größer ist als ein erster vorgegebener Kapazitätsschwellenwert, wobei der zweite Kapazitätsschwellenwert einem vorbestimmten Anteil des ersten Kapazitätsmesswerts, insbesondere einem Produkt mit einem Faktor kleiner 1, insbesondere zwischen 0,5 und 1, entspricht.

Die Messgröße, die bei einem kapazitiven Füllstandssensor für Füllstandsapplikationen mit leitfähigen Medien gemessen wird, ist keine reine Kapazität, sondern eine komplexe Impedanz. Die Impedanz wird gebildet durch die Kapazität über die nichtleitende Behälterwand in Serie mit einer Parallelschaltung aus einer Kapazität über das im Behälter befindliche Medium sowie dessen Ohm'schen Widerstand. Da sich die Menge des Mediums im Behälter verändert, sind im Wesentlichen der Ohm`sche Widerstand und die Kapazität des Behälterinhalts die variablen Messgrößen, die vom Füllstand abhängen. Konventionelle kapazitive Füllstandssensoren messen einen von der Impedanz der mindestens einen Messelektrode abhängigen Messwert bei einer festen Frequenz und stellen abhängig von dem Messwert ein Vorhandensein oder Nichtvorhandensein des Mediums in dem Behälter bzw. das Erreichen oder Nicht-Erreichen einer entsprechenden Füllhöhe fest. Dabei muss jedoch ein Schwellenwert für den Messwert abhängig von einer Behälterwandkapazität vorgegeben werden.

Als flüssige Medien werden hierin bevorzugt wässrige leitfähige Medien mit Dielektrizitätszahlen von über 50 angenommen.

Das obige Verfahren sieht nun vor, (zunächst) eine erste Messung bei einer niedrigen ersten Messfrequenz vorzunehmen. Bei der niedrigeren Messfrequenz ist bei gefülltem Behälter die Medienimpedanz, die durch die Parallelschaltung der Medienkapazität und den Medienwiderstand gebildet ist, niederohmiger als die Behälterwandkapazität. Daher ist die Behälterwandkapazität für die Gesamtimpedanz dominant. Hierzu trägt sowohl die Medienkapazität als auch der Medienwiderstand ihren Anteil bei. Bei gefülltem Behälter spielt die Leitfähigkeit eine untergeordnete Rolle.

Bei niedrigem Füllstand, wird das Medium im Bereich der Messelektrode an den meisten Stellen mit Luft ersetzt. Es findet also ein Medienwechsel statt. Bei niedrigem Füllstand des Füllstandssensors (leerer Behälter) wird die Gesamtkapazität durch die Medienkapazität bestimmt. Da die Medienimpedanz (Luft statt Wasser) deutlich höher ist als die Behälterwandimpedanz, wirkt diese dominant. Die Behälterwand wirkt sich nicht aus und es wird eine sehr kleine Kapazität vom Sensor gemessen.

Befindet sich bei leerem Behälter eine leitfähige Anhaftung über der Messelektrode, so stellt diese praktisch eine Äquipotenzialfläche auf Erdpotenzial dar. Ist die Anhaftung dünn, bildet sich keine große Kapazität zur Umgebung aus. Jedoch kann eine höhere Leitfähigkeit bei Anhaftungen aus leitfähigen Medien noch immer dazu führen, dass die Impedanz von Sensorelektrode zu Bezugspotential dominant von der Behälterwandkapazität abhängt. Der resultierende Messwert ist also bei einem leeren Behälter mit einer Anhaftung identisch zum Messwert bei einem gefüllten Behälter, und der Füllstandssensor würde also beim Leeren des Behälters aufgrund der Restanhaftung keinen geleerten Behälter anzeigen.

Bei einem gefüllten Behälter spielt also die Leitfähigkeit eine untergeordnete Rolle, ganz im Gegenteil zu dem Fall bei Vorliegen eines leeren Behälters mit Anhaftung im Bereich der Messelektrode, wobei die Gesamtkapazität dann tatsächlich etwa der Behälterwandkapazität entspricht, da durch die leitfähige Anhaftung die Medienkapazität praktisch überbrückt wird.

Hierin wird unter einem gefüllten Behälter ein Behälter verstanden, in dem das Medium ein Füllstandsniveau erreicht bzw. übersteigt, das durch die Messelektrode vorgegeben ist. Ein leerer Behälter ist entsprechend ein Behälter, bei dem das Medium im Behälter das Füllstandsniveau, das durch die Messelektrode angegeben ist, nicht erreicht.

Somit kann bei Erkennen eines hohen Füllstands bzw. eines gefüllten Behälters mit der ersten Messung nicht ausgeschlossen werden, dass der Behälter stattdessen leer ist und eine Anhaftung an der Behälterwand im Bereich der Messelektrode vorliegt.

Zur Unterscheidung dieser beiden Fälle wird eine zweite Messung bei einer höheren zweiten Messfrequenz durchgeführt. Bei hohen Messfrequenzen wirkt bei gefülltem Behälter die Medienimpedanz niederohmiger als die Behälterwandkapazität (z. B. bei wässrigen Medien), und das Messsystem misst im Wesentlichen die Behälterwandkapazität als resultierende Gesamtkapazität.

Bei einer (leitfähigen) Anhaftung bei leerem Behälter ist bei der hohen (zweiten) Messfrequenz die Impedanz der Behälterwand deutlich niederohmiger in Bezug auf die Impedanz der Anhaftung (reeller Anteil wird bei steigender Frequenz nicht niederohmiger). Daher wird bei einer (leitfähigen) Anhaftung bei leerem Behälter lediglich die Medienkapazität (Luft statt flüssigem Medium) gemessen. Eine Verbindung der beiden Messungen bei den verschiedenen Messfrequenzen ermöglicht es so, die sich daraus ergebenden Informationen zu kombinieren und dadurch zu unterscheiden, ob der Behälter gefüllt, nicht gefüllt oder nicht gefüllt und mit einer Anhaftung im Bereich der Messelektrode versehen ist.

Gemäß dem obigen Verfahren kann ein erster Kapazitätsmesswert der Gesamtkapazität bei einer niedrigen ersten Messfrequenz erfasst werden. Aus dem ersten Messwert ergibt sich ein erster Kapazitätswert, der bezüglich einer ersten Kapazitätsschwelle überprüft wird. Die erste Kapazitätsschwelle leitet sich von einer maximalen Gesamtkapazität ab, die sich aufgrund der verschiedenen möglichen Konfigurationen des Behälters bzw. der Behälterwand, d. h. der Form, Größe, Wanddicke von Behältern, einstellen kann. Da das obige Verfahren dazu ausgelegt sein soll, mit einer Vielzahl von unterschiedlichen Messsystemkonfigurationen, d. h. unterschiedlichen Behälterwandmaterialien, Behälterwanddicken, Behältergrößen, Messelektroden und dergleichen, eingesetzt zu werden, ist die erste Kapazitätsschwelle so gewählt, dass sie über dem Bereich der maximalen Gesamtkapazität für in Betracht kommende Konfigurationen von Behältern bzw. Behälterwänden liegt.

Alternativ kann auch zunächst der zweite Kapazitätsmesswert erfasst und anschließend der erste Kapazitätsmesswert erfasst werden.

Wird bei dieser ersten Messung erkannt, dass der erste Kapazitätswert unter dem ersten Kapazitätsschwellenwert liegt, so kann auf einen leeren, nicht gefüllten Behälter ohne die Messung störende Anhaftung geschlossen werden. Wird jedoch festgestellt, dass der erste Kapazitätsmesswert den ersten Kapazitätsschwellenwert überschreitet, so kann dies entweder einem nicht gefüllten Behälter mit Anhaftung oder einem gefüllten Behälter entsprechen.

In der zweiten Messung bei einer zweiten Messfrequenz wird ein zweiter Kapazitätsmesswert ermittelt. Damit wird überprüft, ob der zweite Kapazitätsmesswert größer ist als ein zweiter Kapazitätsschwellenwert. Der zweite Kapazitätsschwellenwert kann vorzugsweise abhängig von dem ersten Kapazitätsmesswert, der von der Behälterwandkapazität abhängt, festgelegt werden, insbesondere als ein vorgegebener relativer Anteil des ersten Kapazitätsmesswertes.

Es kann vorgesehen sein, dass ein Füllstand über der Füllstandsschwelle signalisiert wird, wenn der zweite Kapazitätsmesswert den zweiten Kapazitätsschwellenwert übersteigt und wenn der erste Kapazitätsmesswert größer ist als ein erster vorgegebener Kapazitätsschwellenwert.

Liegt der zweite Kapazitätsmesswert über dem zweiten Kapazitätsschwellenwert, so wird erkannt, dass keine Anhaftung vorliegt und der Behälter gefüllt ist. Die Benutzung des Messergebnisses (erster Kapazitätswert) der ersten Messung bei der ersten Messfrequenz ermöglicht es somit, den Füllstandssensor unabhängig von der Behälterwandkapazität mit einer Anhaftungserkennung zu betreiben, so dass dieser für unterschiedliche Behälterkonfigurationen geeignet ist, ohne dass eine Kalibrierung des Füllstandssensors notwendig wird.

Es wird erfindungsgemäß eine Anhaftung an der Behälterwand im Bereich der mindestens einen Messelektrode signalisiert, wenn der zweite Kapazitätsmesswert geringer als der zweite Kapazitätsschwellenwert ist und wenn der erste Kapazitätsmesswert größer ist als ein erster vorgegebener Kapazitätsschwellenwert. Gibt es bei der zweiten Messfrequenz einen Abfall des gemessenen zweiten Kapazitätswertes gegenüber dem ersten Kapazitätswert, kann eine Anhaftung erkannt werden. Liegt der Messwert bei der hohen zweiten Messfrequenz oberhalb des zweiten Kapazitätsschwellenwerts, wird dadurch erkannt, dass der Behälter gefüllt ist.

Bei der Ermittlung des zweiten Kapazitätsschwellenwerts aus dem ersten Kapazitätswert kann zudem auch ein Abfall der ersten Messkapazität bei steigenden Frequenzen berücksichtigt werden. In realen Messungen liegen auch bei gefülltem Behälter keine über der Messfrequenz konstanten Verläufe des Kapazitätsmesswerts vor, sondern bei steigenden Messfrequenzen fällt der Kapazitätsmesswert leicht ab. Dieser ist jedoch trotzdem deutlich von dem Vorliegen einer Anhaftung zu unterscheiden, da selbst bei leicht abfallendem Kapazitätsmesswert in Richtung höherer Messfrequenzen der deutliche Abfall des Kapazitätsmesswerts zu erkennen ist. Daher kann bei der Ermittlung des zweiten Kapazitätsschwellenwerts der Abfall des Kapazitätsmesswerts bei steigenden Messfrequenzen berücksichtigt werden.

Das obige Verfahren kann auch mit mehr als einer Messelektrode genutzt werden, wobei ein erster Kapazitätsmesswert mit der ersten Messfrequenz an einer ersten und ein zweiter Kapazitätsmesswert mit der zweiten Messfrequenz an einer zweiten Messelektrode gemessen wird. Die Messelektroden sollten zur Füllstandsmessung bezüglich des Behälters in gleicher Höhe und mit vergleichbarer Grundkapazität (Fläche, Anordnung am Behälter) ausgebildet sein.

Gemäß einer alternativen Vorgehensweise kann der zweite Kapazitätsschwellenwert (C_{S2}) einem Produkt des zweiten Kapazitätsmesswerts mit einem Faktor größer 1 entsprechen.

Ein Füllstand über der Füllstandsschwelle kann signalisiert werden, wenn der erste Kapazitätsmesswert geringer als der zweite Kapazitätsschwellenwert ist und wenn der erste Kapazitätsmesswert größer ist als ein erster vorgegebener Kapazitätsschwellenwert.

Es kann vorgesehen sein, dass der zweite Kapazitätsschwellenwert von einer Frequenzdifferenz zwischen der ersten Messfrequenz und der zweiten Messfrequenz abhängt.

Weiterhin können der erste und der zweite Kapazitätsmesswert mithilfe einer Ladungstransfermessung gemessen werden, wobei die Ladungstransfermessung durch Schalten von Ladungsströmen zu und von der Messelektrode mithilfe eines gepulsten Anregesignals durchgeführt wird, wobei das Anregesignal eine Zyklusfrequenz und ein Tastverhältnis aufweist, wobei die Zyklusfrequenzen als erste und zweite Messfrequenz bereitgestellt werden.

Gemäß einer Ausführungsform kann vorgesehen sein, dass der erste und der zweite Kapazitätsmesswert mithilfe einer Ladungstransfermessung gemessen werden, wobei die Ladungstransfermessung durch Schalten von Ladungsströmen zu und von der Messelektrode mithilfe eines gepulsten Anregesignals durchgeführt wird, wobei das Anregesignal eine Zyklusfrequenz und ein Tastverhältnis aufweist, wobei die erste Messfrequenz als durch ein erstes Tastverhältnis moduliertes Anregesignal und die zweite Messfrequenz als durch ein zweites Tastverhältnis moduliertes Anregesignal jeweils bereitgestellt wird, wobei das erste Tastverhältnis näher an einem Tastverhältnis von 50% liegt als das zweite Tastverhältnis.

Dadurch, dass das erste Tastverhältnis näher an einem Tastverhältnis von 50% liegt als das zweite Tastverhältnis, kann bei der Ladungstransfermessung mit dem ersten Tastverhältnis viel Zeit für den Ladungsausgleich bereitgestellt werden, während bei dem zweiten Tastverhältnis eine der beiden Zeiten für den Ladungstransfer verkürzt ist. Bei einer Veränderung des Tastverhältnisses weg von 50% wird immer eine der beiden Umladedauern verkürzt, so dass sowohl eine Erhöhung als auch eine Erniedrigung des Tastverhältnisses eine kurze Umladedauer zur Folge (in einer Phase des Zyklusses) hat.

Gemäß einem weiteren Aspekt ist eine Vorrichtung gemäß Anspruch 11 vorgesehen, die ausgebildet ist, das obige Verfahren auszuführen.

Gemäß einem weiteren Aspekt ist ein Messsystem für eine Füllstandsmessung vorgesehen, umfassend:
- eine Messelektrode, die an einer Behälterwand eines Behälters anbringbar ist;
- die obige Auswerteeinheit.

### Kurzbeschreibung der Zeichnungen

Ausführungsformen werden nachfolgend anhand der beigefügten Zeichnungen näher erläutert. Es zeigen:
- Figur 1: eine schematische Darstellung eines Messsystems mit einem Füllstandssensor;
- Figur 2: ein Ersatzschaltbild für die Impedanz der Messelektrode;
- Figur 3: ein Flussdiagramm zur Veranschaulichung eines Verfahrens zum Betreiben des Füllstandssensors; und
- Figur 4: einen Kapazitätsverlauf einer Ersatzschaltung des Messsystems über der Frequenz zur Veranschaulichung der Möglichkeit, durch Messungen bei mehreren Messfrequenzen eine Anhaftung an der Messelektrode von einem gefüllten Behälter zu unterscheiden; und
- Figur 5: eine Messschaltung zur Messung von Kapazitätsmesswerten nach einem Ladungstransferverfahren.

### Beschreibung von Ausführungsformen

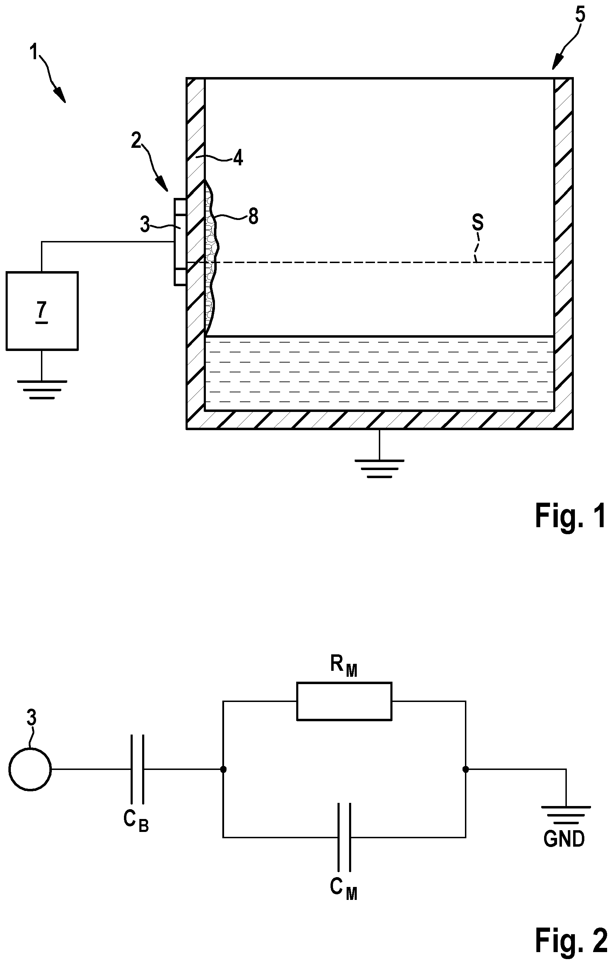

Figur 1 zeigt eine schematische Darstellung eines Messsystems 1 für eine Füllstandsmessung mit einem Füllstandssensor 2, der eine Messelektrode 3 an einer Behälterwand 4 eines Behälters 5 aufweist. Die Messelektrode 3 ist an der Behälterwand 4 in einer Höhe angebracht, die eine Füllstandsschwelle S angibt, deren Überschreiten durch ein Flüssigkeitsniveau durch den Füllstandssensor 2 angezeigt werden soll.

Die Messung mithilfe des Füllstandssensors 2 erfolgt kapazitiv. Dazu ist die Messelektrode 3 mit einer Auswerteeinheit 7 gekoppelt, die eine Kapazitätsmessung der Messelektrode 3 zu einem Massepotenzial GND bei verschiedenen Messfrequenzen vornehmen kann. Alternativ kann eine gegenphasige Anregung vorgesehen sein, so dass sich die Ströme in das Massepotenzial kompensieren, und daher die Impedanz bezüglich des Massepotenzials und zurück zum Messbezugspotential vernachlässigbar ist.

Der Behälter 5 ist aus einem nichtleitenden Material gefertigt, insbesondere einem Kunststoffmaterial, und ist zur Aufnahme eines flüssigen Mediums ausgeführt, wie z. B. Wasser. Das in dem Behälter 5 befindliche Medium kann stark verschmutzt sein, so dass sich bei einer Füllstandsänderung Anhaftungen 8 oder Anlagerungen über den Bereich der Messelektrode 3 an der Behälterwand 4, d. h. in dem Bereich auf der Innenseite der Behälterwand, der der Messelektrode 3 gegenüberliegt, absetzen können. Weiterhin kann sich auch das in dem Behälter 5 befindliche Medium bei einer Füllstandsänderung an der Behälterwand 4 anlagern. Diese können bei einer herkömmlichen kapazitiven Füllstandsmessung durch einfaches Auswerten einer Messkapazität zu fehlerhaften Erkennungen eines gefüllten Behälters 5 führen.

Figur 1 zeigt den Fall eines leeren Behälters mit einer Anhaftung 8 im Bereich der Messelektrode 3. Weitere zu detektierende Zustände sind ein gefüllter Behälter 5 und ein leerer Behälter ohne Anhaftung.

In Figur 2 ist ein Ersatzschaltbild der Impedanz der Messelektrode 3 dargestellt. Diese wird aus einer seriellen Schaltung einer Behälterwandkapazität C_{B} und einer Parallelschaltung eines Medienwiderstands R_{M} und einer Medienkapazität C_{M} gebildet.

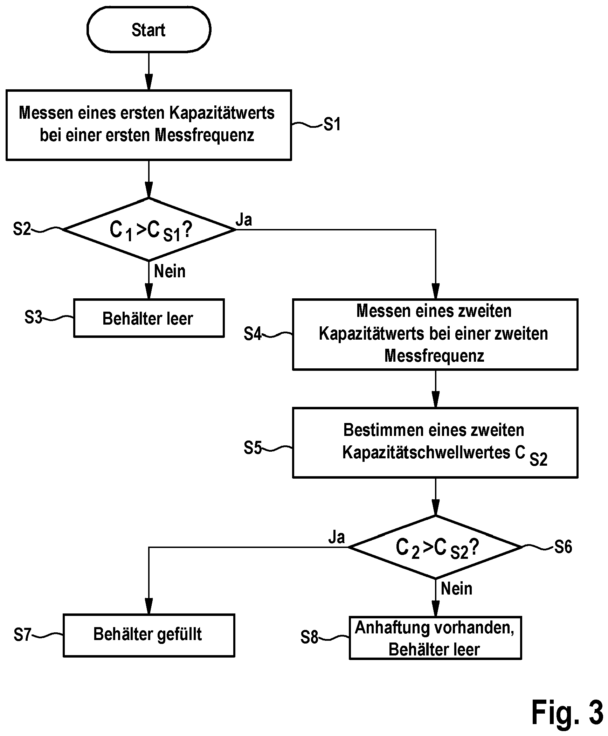

Zum Erkennen eines Füllstands des Behälters 5, d. h. ob ein Behälter über eine durch die Messelektrode 3 vorgegebene Füllstandsschwelle S gefüllt ist oder ob das Flüssigkeitsniveau sich unterhalb der Füllstandsschwelle S befindet, führt die Auswerteeinheit 7 ein Verfahren aus, wie es in dem Flussdiagramm der Figur 3 dargestellt ist.

In Schritt S1 wird eine Messung eines ersten Kapazitätsmesswerts C₁ bei einer Messfrequenz f1 im Bereich von 10 kHz bis 5 MHz durchgeführt. Da bei niedrigen Messfrequenzen die Wirkung der Medienkapazität C_{M} geringer ist als die Wirkung der Behälterwandkapazität , wird die Gesamtimpedanz der Messung bei der ersten Messfrequenz bei einem gefüllten Behälter 5 im Wesentlichen durch die Behälterkapazität C_{B} bestimmt. Bei niedrigen Messfrequenzen misst also ein solcher Füllstandssensor 2 bei gefülltem Behälter 5 lediglich die Kapazität über die Behälterwand 4. Ist der Behälter 5 leer, so misst die Auswerteeinheit 7 die serielle Schaltung zwischen der Behälterwandkapazität C_{B} und der Luft im Inneren des Behälters 5, so dass der gemessene Kapazitätswert sehr gering wird. Jedoch ergibt die erste Messung einen zu einem gefüllten Behälter 5 vergleichbaren ersten Kapazitätsmesswert C₁, wenn sich eine leitfähige Anhaftung im Bereich der Messelektrode 3 befindet, da diese auf der Innenseite der Behälterwand gegenüber der Messelektrode 3 eine Äquipotenzialfläche ausbildet.

In Schritt S2 wird daher überprüft, ob der erste Kapazitätsmesswert C₁ über oder unter einem ersten Kapazitätsschwellenwert C_{S1} liegt. Der erste Kapazitätsschwellenwert C_{S1} ist vorzugsweise abhängig von einer maximal möglichen Behälterwandkapazität C_{B} bestimmt, die sich bei verschiedenen möglichen Konfigurationen des Behälters 5 ergeben können. Insbesondere wird hier davon ausgegangen, dass die Behälterwandkapazität einer Kapazität über die Behälterwand entspricht, d. h. von Sensorelektrode außen zur Innenwand (ausgehend von einem konstanten Potential auf der Behälterinnenwand). Der Kapazitätswert des leeren Behälters entspricht der Serienschaltung dieser Behälterwandkapazität mit der Kapazität über die Luft im Inneren des Behälters. Aufgrund der geringeren relativen Dielektrizitätskonstanten und der relativ langen Wege ist die Kapazität über die Luft extrem gering. Folglich ist auch die Kapazität der Serienschaltung extrem gering. Insbesondere stellt hier die Wanddicke, die Form und das Material der Behälterwand 4 einen Bereich möglicher Behälterwandkapazitäten für den ersten Kapazitätsschwellenwert C_{S1} dar. Insbesondere kann der erste Kapazitätsschwellenwert C_{S1} so gewählt werden, wie es durch einen Behälter 5 mit geringst vorkommender Behälterwanddicke und einem Behälterwandmaterial mit der höchsten Dielektrizitätskonstante bei einer gegebenen Fläche der Messelektrode 3 auftreten kann. Dieser Wert kann zur Erhöhung der Robustheit mit einem Toleranzbetrag von zwischen 5 bis 20 % erhöht werden.

Wird in Schritt S2 festgestellt, dass der gemessene erste Kapazitätsmesswert C₁ den ersten Kapazitätsschwellenwert C_{S1} übersteigt (Alternative: Ja), so wird dadurch festgestellt, dass entweder eine Anhaftung im Bereich der Messelektrode 3 vorliegt oder der Behälter 5 gefüllt ist. Das Verfahren wird mit Schritt S4 fortgesetzt. Anderenfalls (Alternative: Nein) wird in Schritt S3 festgestellt, dass der Behälter 5 leer ist.

In Schritt S4 wird in Folge eine zweite Messung vorgenommen, die bei einer deutlich höheren zweiten Messfrequenz f2 als die erste Messfrequenz f1 stattfindet. Die zweite Messfrequenz f2 kann in einem Bereich zwischen 5 und 100 MHz gewählt werden und führt zu einem zweiten Kapazitätsmesswert C₂.

Grundsätzlich ist eine höhere zweite Messfrequenz hilfreich und notwendig, um entsprechend niederohmigere Anhaftungen zu erkennen. Um die Auswirkungen von Störaussendungen bei hohen Messfrequenzen zu reduzieren, kann die Anregung nur zeitweise erfolgen.

In Schritt S5 wird ein zweiter Kapazitätsschwellenwert C_{S2} bestimmt. Der zweite Kapazitätsschwellenwert C_{S2} kann relativ zu dem ersten Kapazitätsmesswert C₁ aus der ersten Messung bei der niedrigen ersten Messfrequenz f1 bestimmt werden. Beispielsweise kann der zweite Kapazitätsschwellenwert C_{S2} einem vorgegebenen Anteil des ersten Kapazitätsmesswert C₁ entsprechen, der im Bereich zwischen 50 und 90 %, vorzugsweise im Bereich zwischen 60 und 80 % des ersten Kapazitätsmesswerts C₁ liegt. Auf diese Weise kann bei der Bestimmung, ob eine Anhaftung 8 vorliegt, die vorliegende Behälterwandkapazität C_{B} berücksichtigt werden, ohne dass zuvor eine Kalibrierung des Messverfahrens notwendig ist.

In Schritt S6 wird überprüft, ob der zweite Kapazitätsmesswert C₂ einen zweiten vorgegebenen Kapazitätsschwellenwert C_{S2} übersteigt. Übersteigt der zweite Kapazitätsmesswert C₂ den zweiten Kapazitätsschwellenwert C_{S2} (Alternative. Ja), so wird damit erkannt, dass keine Anhaftung 8 vorliegt und entsprechend in Schritt S7 ein gefüllter Behälter signalisiert. Liegt der zweite Kapazitätsmesswert C₂ darunter (Alternative: Nein), so wird eine Anhaftung 8 erkannt und in Schritt S8 entsprechend signalisiert.

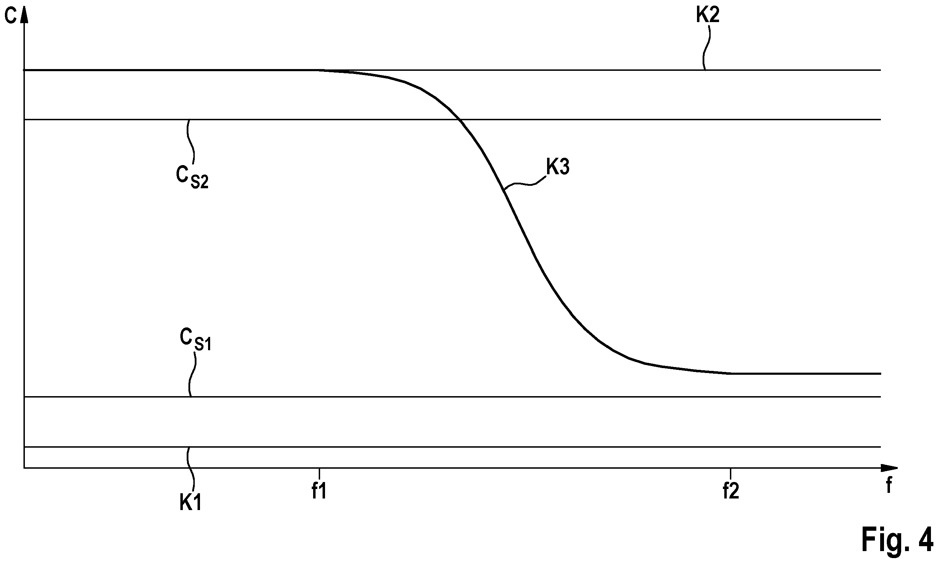

Figur 4 zeigt die Verläufe der Gesamtkapazität für einen leeren Behälter 5 (Kurve K1), einen gefüllten Behälter 5 (Kurve K2) und für einen Behälter 5 mit einer Anhaftung 8 (Kurve K3) über der Messfrequenz f. Man erkennt zudem den ersten Kapazitätsschwellenwert C_{S1}, der im Wesentlichen so vorgegeben ist, dass der Füllstandssensor 2 für Behälter 5 vieler verschiedener Konfigurationen geeignet ist.

Weiterhin ist ein zweiter Kapazitätsschwellenwert C_{S2} gezeigt, der sich beispielhaft aus der Höhe des ersten Kapazitätsmesswerts C₁ ergibt, die sich bei der ersten Messung bei der niedrigen Messfrequenz f1 ergeben hat.

Die Kurve K1 zeigt einen Verlauf der Gesamtkapazität an der Messelektrode 3, die unterhalb des ersten Kapazitätsschwellenwerts C_{S1} liegt und im Wesentlichen konstant oder leicht abfallend verläuft. Der Verlauf der Gesamtkapazität der Kurve K1 entspricht einem leeren Behälter 5, da sich die Gesamtkapazität als Serienschaltung der Behälterwandkapazität C_{B} und der im Behälter 5 befindlichen Luft bzw. eines sonstigen nichtflüssigen bzw. nichtleitfähigen Mediums ergibt.

Die horizontale Linie der Kurve K2 bedeutet einen rein kapazitiven Verlauf und zeigt den Fall eines gefüllten Behälters, wobei die Medienkapazität so niederohmig ist, dass sich die Gesamtkapazität als Behälterwandkapazität C_{B} ergibt. Bei hohen Messfrequenzen ist die Medienkapazität C_{M} niederohmiger als der Ohm'sche Medienwiderstand R_{M}, und der Füllstandssensor 2 misst die Serienschaltung aus der Behälterwandkapazität C_{B} und der Medienkapazität C_{M}, die der der Behälterwandkapazität entsprechenden Gesamtkapazität entspricht. Die Kurve K2 weist daher im Wesentlichen eine gleichbleibende Kapazität mit nur geringer Abhängigkeit von der Messfrequenz auf. Allenfalls kann der Kapazitätswert über der Messfrequenz leicht abnehmen.

Bei Vorliegen einer leitfähigen Anhaftung dominiert bei niedrigen Frequenzen der Ohm'sche Widerstand durch die Anhaftung 8, so dass ein Abfall der Messkapazität mit steigenden Frequenzen zu erkennen ist (Kurve K3).

Da die Behälterwandkapazität C_{B} je nach Behälter 5 unterschiedlich sein kann, wird der zweite Kapazitätsschwellenwert C_{S2} abhängig von der bei der ersten Messfrequenz f1 gemessenen Gesamtkapazität bestimmt. Dieser zweite Kapazitätsschwellenwert C_{S2} entspricht einem Anteil des während der ersten Messung gemessenen ersten Kapazitätsmesswerts C₁, der es ermöglicht, durch ein Unterschreiten des zweiten Kapazitätsschwellenwerts C_{S2} eine Anhaftung 8 zu erkennen. Beispielsweise kann der zweite Kapazitätsschwellenwert C_{S2} zwischen 60 und 90 % des ersten Kapazitätsmesswertes C₁ betragen. Ferner kann zusätzlich eine lineare Reduzierung des zweiten Kapazitätsschwellenwert C_{S2} abhängig von dem Abstand der zweiten Messfrequenz zu der ersten Messfrequenz f1 berücksichtigt werden, um parasitäre Effekte der Kapazitätsmessung zu berücksichtigen.

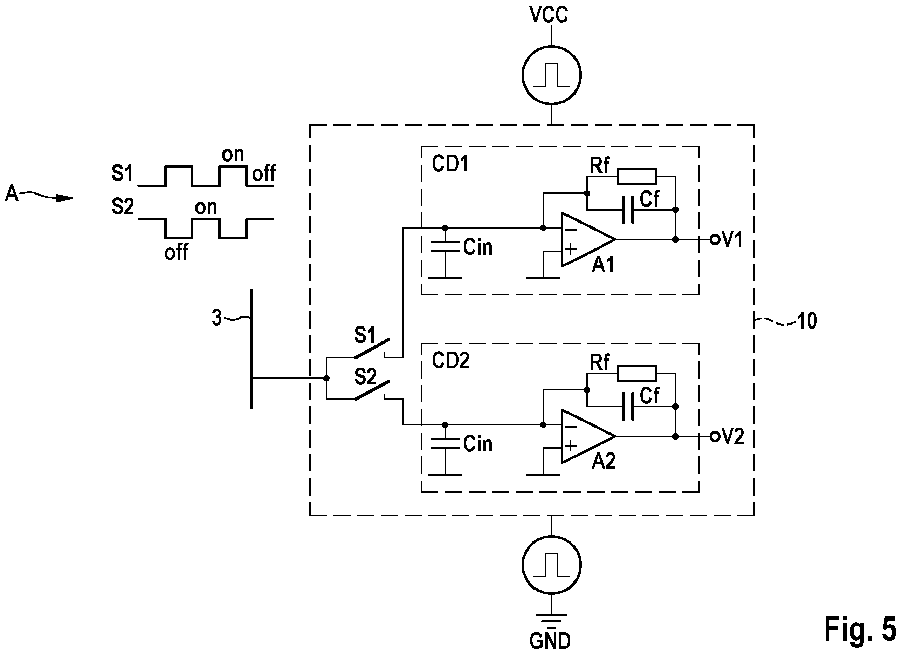

Die Auswerteeinheit 7 kann die Kapazitätsmessung mithilfe einer Ladungstransfermessung in einer Messschaltung 10 durchführen. Beispielsweise ist in Fig. 5 eine Messschaltung 10 dargestellt, die eine solche Messschaltung 10 schematisch darstellt. Die Messschaltung kann insgesamt mit einer Versorgungsspannung Vcc -GND versorgt werden, die mit einem Rechtecksignal überlagert ist. Die Messung kann mit einem steilflankigen rechteckförmigen Anregesignal A vorgenommen werden. Grundsätzlich kann mit einer Schaltung zur Ladungstransfermessung die Messfrequenz als die Frequenz des Anregesignals vorgegeben werden.

Alternativ kann das Anregesignal mit unterschiedlichen Tastverhältnissen bereitgestellt werden. Während bei Tastverhältnissen, bei denen beiden Strompfaden zu den Transimpedanzverstärkern der Messschaltung 10 die gleiche Zeit für den Ladungsausgleich zur Verfügung steht, insbesondere bei Tastverhältnissen um 50 %, unmittelbar nach der Flanke ein Strom bzw. eine Ladungsmenge, die durch die Behälterwandkapazität und die Medienkapazität bestimmt wird, fließt, kommt es anschließend zu einem langsamen Ladungsausgleich über den Ohm'schen Widerstand des Mediums, wenn der Behälter 5 gefüllt ist oder eine leitfähige Anhaftung an der Behälterwand 4 vorliegt. Bei ausreichender Pulsdauer wird die Medienkapazität über den Ohm'schen Medienwiderstand vollständig entladen, und die Anregespannung A liegt vollständig über der Behälterwandkapazität C_{B} an. Die während dieser längeren Pulsdauer transportierte Ladungsmenge ist daher unabhängig von der Medienkapazität und nur von der Behälterwandkapazität abhängig.

Wird nun bei von 50% deutlich abweichenden Tastverhältnissen der Ladevorgang nach einer deutlich kürzeren Pulsdauer abgebrochen, ist die transportierte Ladungsmenge für einen der Ladungsausgleiche kürzer und somit stärker von der Medienkapazität abhängig, und man kann im Messsignal eine Unterscheidung zwischen einem gefüllten Behälter und einer Anhaftung treffen. Die unterschiedliche Pulsdauer des Anregesignals kann somit einerseits durch die Änderung der Zyklusfrequenz bei der Ladungstransfermessung oder andererseits durch eine Änderung des Tastverhältnisses bei gleicher Zyklusfrequenz vorgegeben werden.

Die Messung mit dem Ladungstransferverfahren mit der ersten und der zweiten Messfrequenz, die lediglich durch eine Änderung des Tastverhältnisses des Anregesignals vorgegeben wird, ist vorteilhaft, da durch die konstante Zyklusfrequenz kein frequenzabhängiger Stromanstieg in der Messschaltung 10 erfolgt, so dass es nicht notwendig ist, die Verstärkung, d. h. die Transimpedanz der Operationsverstärker, entsprechend nachzuführen. Außerdem kann auf diese Weise die Störaussendung durch die konstante Anzahl von Flanken gering gehalten werden.

Bei einer Kapazitätsmessung schließt sich der Stromkreis über eine Impedanz, die aus dem Potentialbezug des Mediums zu Massepotenzial, Netzteil und Versorgungsleitung des Sensors gebildet wird, so dass parasitäre Einflüsse bestehen. Insbesondere wenn die Messung mit sehr steilen Flanken und kurzen Pulslängen durchgeführt wird, können diese parasitären Einflüsse das Messsignal stark beeinflussen. Es ist möglich, mit einer Gegenelektrode gleicher Fläche und Amplitude gegenphasig auf den Behälter 5 und das Medium zu koppeln. Auf diese Weise kompensieren sich die Potentialverschiebungen des Behälters 5 und des Mediums zu dem Massepotenzial, und die ungewünschten Stromanteile heben sich bei entsprechender Symmetrie vollständig auf. Die Ströme fließen im Wesentlichen zwischen der Messelektrode und der Gegenelektrode und in der Messschaltung auf Wegen kontrollierter Impedanz (geringe Induktivität, wählbare resistive Bedämpfung).

## Patentansprüche

1. Verfahren zum Betreiben eines Messsystems (1) mit einem Füllstandssensor (2) mit mindestens einer Messelektrode (3), die eine Füllstandsschwelle (S) an einer Behälterwand (4) eines Behälters (5) definiert, mit folgenden Schritten:
- Messen eines ersten Kapazitätsmesswerts (C₁) einer Kapazität der mindestens einen Messelektrode (3) bezüglich eines Referenzpotentials bei einer ersten Messfrequenz (f1);
- Messen eines zweiten Kapazitätsmesswerts (C₂) einer Kapazität der mindestens einen Messelektrode (3) bezüglich eines Referenzpotentials bei einer zweiten Messfrequenz (f2), wobei die zweite Messfrequenz (f2) höher ist als die erste Messfrequenz (f1),
**gekennzeichnet durch**
- Signalisieren einer Anhaftung an der Behälterwand (4) im Bereich der mindestens einen Messelektrode (3) abhängig von dem ersten und dem zweiten Kapazitätsmesswert (C₁, C₂) und einem zweiten Kapazitätsschwellenwert (C_{S2}), der von dem ersten oder von dem zweiten Kapazitätsmesswert (C₁, C₂) abhängt, wenn der zweite Kapazitätsmesswert (C₂) geringer als der zweite Kapazitätsschwellenwert (C_{S2}) ist und wenn der erste Kapazitätsmesswert (C₁) größer ist als ein erster vorgegebener Kapazitätsschwellenwert (C_{S1})
wobei der zweite Kapazitätsschwellenwert (C_{S2}) einem vorbestimmten Anteil des ersten Kapazitätsmesswerts (C₁), insbesondere einem Produkt des ersten Kapazitätsmesswerts (C₁) mit einem Faktor kleiner 1, insbesondere mit einem Faktor zwischen 0,5 und 1, entspricht.

2. Verfahren nach Anspruch 1, wobei ein Füllstand unter der Füllstandsschwelle (S) signalisiert wird, wenn der erste Kapazitätsmesswert (C₁) einen ersten vorgegebenen Kapazitätsschwellenwert (C_{S1}) unterschreitet.

3. Verfahren nach Anspruch 1 oder 2, wobei ein Füllstand über der Füllstandsschwelle (S) signalisiert wird, wenn der zweite Kapazitätsmesswert (C₂) den zweiten Kapazitätsschwellenwert (C_{S2}) übersteigt und insbesondere wenn der erste Kapazitätsmesswert (C₁) größer ist als ein erster vorgegebener Kapazitätsschwellenwert (C_{S1}).

4. Verfahren nach einem der Ansprüche 1 bis 2, wobei der zweite Kapazitätsschwellenwert (C_{S2}) einem Produkt des zweiten Kapazitätsmesswerts (C₂) mit einem Faktor größer 1 entspricht.

5. Verfahren nach Anspruch 4, wobei ein Füllstand über der Füllstandsschwelle (S) signalisiert wird, wenn der erste Kapazitätsmesswert (C₁) geringer als der zweite Kapazitätsschwellenwert (C_{S2}) ist und insbesondere wenn der erste Kapazitätsmesswert (C₁) größer ist als ein erster vorgegebener Kapazitätsschwellenwert (C_{S1}).

6. Verfahren nach einem der Ansprüche 4 bis 5, wobei eine Anhaftung an der Behälterwand (4) im Bereich der mindestens einen Messelektrode (3) signalisiert wird, wenn der erste Kapazitätsmesswert (C₁) den zweiten Kapazitätsschwellenwert (C_{S2}) übersteigt und insbesondere wenn der erste Kapazitätsmesswert (C₁) größer ist als ein erster vorgegebener Kapazitätsschwellenwert (C_{S1}).

7. Verfahren nach einem der Ansprüche 1 bis 6, wobei der zweite Kapazitätsschwellenwert (C_{S2}) weiterhin abhängig von einer Frequenzdifferenz zwischen der ersten Messfrequenz (f1) und der zweiten Messfrequenz (f2) bestimmt wird.

8. Verfahren nach einem der Ansprüche 1 bis 7, wobei der erste Kapazitätsmesswerts (C₁) zeitlich vor dem zweiten Kapazitätsmesswerts (C₂) erfasst wird, oder wobei der der zweite Kapazitätsmesswerts (C₂) zeitlich vor dem ersten Kapazitätsmesswerts (C₁) erfasst wird.

9. Verfahren nach einem der Ansprüche 1 bis 8, wobei der erste und der zweite Kapazitätsmesswert (C₁, C₂) mithilfe einer Ladungstransfermessung gemessen wird, wobei die Ladungstransfermessung durch Schalten von Ladungsströmen zu und von der mindestens einen Messelektrode (3) mithilfe eines gepulsten Anregesignals durchgeführt wird, wobei das Anregesignal (A) eine Zyklusfrequenz und ein Tastverhältnis aufweist, wobei die Zyklusfrequenzen als erste und zweite Messfrequenz (f1, f2) bereitgestellt werden.

10. Verfahren nach einem der Ansprüche 1 bis 9, wobei der erste und der zweite Kapazitätsmesswert (C₁, C₂) mithilfe einer Ladungstransfermessung gemessen wird, wobei die Ladungstransfermessung durch Schalten von Ladungsströmen zu und von der mindestens einen Messelektrode (3) mithilfe eines gepulsten Anregesignals durchgeführt wird, wobei das Anregesignal (A) eine Zyklusfrequenz und ein Tastverhältnis aufweist, wobei die erste Messfrequenz (f1) als durch ein erstes Tastverhältnis moduliertes Anregesignal (A) und die zweite Messfrequenz (f2) als durch ein zweites Tastverhältnis moduliertes Anregesignal jeweils bereitgestellt wird, wobei das erste Tastverhältnis näher an einem Tastverhältnis von 50% liegt als das zweite Tastverhältnis.

11. Vorrichtung, umfassend einen Füllstandssensor (2) mit mindestens einer Messelektrode (3), die eine Füllstandsschwelle (S) an einer Behälterwand (4) eines Behälters (5) definiert, und eine Auswerteeinheit (7), die ausgebildet ist, ein Verfahren nach einem der Ansprüche 1 bis 10 auszuführen.

## Claims

1. A method for operating a measuring system (1) having a level sensor (2) with at least one measuring electrode (3) which defines a level threshold (S) on a container wall (4) of a container (5), having the following steps:
- Measuring a first capacitance value (C₁) of a capacitance of the at least one measuring electrode (3) with respect to a reference potential at a first measuring frequency (f1);
- Measuring a second capacitance value (C₂) of a capacitance of the at least one measuring electrode (3) with respect to a reference potential at a second measuring frequency (f2), the second measuring frequency (f2) being higher than the first measuring frequency (f1),
**characterized in that**
- signaling an adhesion to the container wall (4) in the region of the at least one measuring electrode (3) as a function of the first and the second capacitance value (C₁, C₂) and a second capacitance threshold value (C_{S2}) which depends on the first or on the second capacitance value (C₁, C₂) if the second capacitance value (C₂) is lower than the second capacitance threshold value (C_{S2}) and if the first capacitance value (C₁) is higher than a first predetermined capacitance threshold value (C_{S1});
wherein the second capacitance threshold value (C_{S2}) corresponds to a predetermined proportion of the first capacitance value (C₁), in particular to a product of the first capacitance value (C₁) with a factor smaller than 1, in particular with a factor between 0.5 and 1.

2. The method according to claim 1, wherein a fill level below the fill level threshold (S) is signaled if the first capacitance measured value (C₁) falls below a first predetermined capacitance threshold value (C_{S1}).

3. The method according to claim 1 or 2, wherein a fill level above the fill level threshold (S) is signaled if the second capacitance value (C₂) exceeds the second capacitance threshold value (C_{S2}) and, in particular, if the first capacitance value (C₁) is greater than a first predetermined capacitance threshold value (C_{S1}).

4. The method according to any one of claims 1 to 2, wherein the second capacitance threshold value (C_{S2}) corresponds to a product of the second capacitance value (C₂) with a factor greater than 1.

5. The method according to claim 4, wherein a fill level above the fill level threshold (S) is signaled if the first capacitance value (C₁) is lower than the second capacitance threshold value (C) and, in particular, if the first capacitance value (C₁) is greater than a first predetermined capacitance threshold value (C_{S1}).

6. The method according to any one of claims 4 to 5, wherein adhesion to the container wall (4) in the region of the at least one measuring electrode (3) is signaled when the first capacitance value (C₁) exceeds the second capacitance threshold value (C_{S2}) and, in particular, when the first capacitance value (C₁) is greater than a first predetermined capacitance threshold value (C_{S1}).

7. The method according to any one of claims 1 to 6, wherein the second capacitance threshold value (C_{S2}) is further determined depending on a frequency difference between the first measurement frequency (f1) and the second measurement frequency (f2).

8. The method according to any one of claims 1 to 7, wherein the first capacitance value (C₁) is detected in time before the second capacitance value (C₂), or wherein the second capacitance value (C₂) is detected in time before the first capacitance value (C₁).

9. The method according to any one of claims 1 to 8, wherein the first and the second capacitance values (C₁, C₂) are measured by means of a charge transfer measurement, wherein the charge transfer measurement is performed by switching charge currents to and from the at least one measuring electrode (3) by means of a pulsed excitation signal, wherein the excitation signal (A) has a cycle frequency and a duty cycle, wherein the cycle frequencies are provided as first and second measurement frequencies (f1, f2).

10. The method according to any one of claims 1 to 9, wherein the first and second capacitance values (C₁, C₂) are measured using a charge transfer measurement, wherein the charge transfer measurement is performed by switching charge currents to and from the at least one measurement electrode (3) using a pulsed excitation signal, wherein the excitation signal (A) has a cycle frequency and a duty cycle, wherein the first measurement frequency (f1) is provided as an excitation signal (A) modulated by a first duty cycle and the second measurement frequency (f2) is provided as an excitation signal modulated by a second duty cycle, respectively, wherein the first duty cycle is closer to a 50% duty cycle than the second duty cycle.

11. A device having a level sensor (2) with at least one measuring electrode (3), which defines a level threshold (S) on a container wall (4) of a container (5), and a evaluation unit (7) which is configured to carry out a method according to one of claims 1 to 10.

## Revendications

1. Procédé pour faire fonctionner un système de mesure (1) comprenant un capteur de niveau de remplissage (2) pourvu d'au moins une électrode de mesure (3), laquelle définit un seuil de niveau de remplissage (S) sur une paroi de récipient (4) d'un récipient (5), comprenant les étapes suivantes :
- mesure d'une première valeur mesurée de capacité (C₁) d'une capacité de l'au moins une électrode de mesure (3) par rapport à un potentiel de référence à une première fréquence de mesure (f1) ;
- mesure d'une deuxième valeur mesurée de capacité (C₂) d'une capacité de l'au moins une électrode de mesure (3) par rapport à un potentiel de référence à une deuxième fréquence de mesure (f2), la deuxième fréquence de mesure (f2) étant supérieure à la première fréquence de mesure (f1),
**caractérisé par**
- signalement d'une adhérence à la paroi de récipient (4) dans la zone de l'au moins une électrode de mesure (3) en fonction de la première et de la deuxième valeur mesurée de capacité (C₁, C₂) et d'une deuxième valeur de seuil de capacité (C_{S2}), qui dépend de la première ou de la deuxième valeur mesurée de capacité (C₁, C₂), lorsque la deuxième valeur mesurée de capacité (C₂) est inférieure à la deuxième valeur de seuil de capacité (C_{S2}) et lorsque la première valeur mesurée de capacité (C₁) est supérieure à une première valeur de seuil de capacité (C_{S1}) prédéfinie
la deuxième valeur de seuil de capacité (C_{S2}) correspondant à une part prédéterminée de la première valeur mesurée de capacité (C₁), notamment un produit de la première valeur mesurée de capacité (C₁) par un facteur inférieur à 1, notamment par un facteur compris entre 0,5 et 1.

2. Procédé selon la revendication 1, un niveau de remplissage étant signalé au-dessous du seuil de niveau de remplissage (S) lorsque la première valeur mesurée de capacité (C₁) devient inférieure à une première valeur de seuil de capacité (C_{S1}) prédéfinie.

3. Procédé selon la revendication 1 ou 2, un niveau de remplissage étant signalé au-dessus du seuil de niveau de remplissage (S) lorsque la deuxième valeur mesurée de capacité (C₂) devient supérieure à la deuxième valeur de seuil de capacité (C_{S2}) et notamment lorsque la première valeur mesurée de capacité (C₁) est supérieure à une première valeur de seuil de capacité (C_{S1}) prédéfinie.

4. Procédé selon l'une des revendications 1 à 2, la deuxième valeur de seuil de capacité (C_{S2}) correspondant à un produit de la deuxième valeur mesurée de capacité (C₂) par un facteur supérieur à 1.

5. Procédé selon la revendication 4, un niveau de remplissage étant signalé au-dessus du seuil de niveau de remplissage (S) lorsque la première valeur mesurée de capacité (C₁) est inférieure à la deuxième valeur de seuil de capacité (C_{S2}) et notamment lorsque la première valeur mesurée de capacité (C₁) est supérieure à une première valeur de seuil de capacité (C_{S1}) prédéfinie.

6. Procédé selon l'une des revendications 4 à 5, une adhérence à la paroi de récipient (4) dans la zone de l'au moins une électrode de mesure (3) étant signalée lorsque la première valeur mesurée de capacité (C₁) devient supérieure à la deuxième valeur de seuil de capacité (C_{S2}) et notamment lorsque la première valeur mesurée de capacité (C₁) est supérieure à une première valeur de seuil de capacité (C_{S1}) prédéfinie.

7. Procédé selon l'une des revendications 1 à 6, la deuxième valeur de seuil de capacité (C_{S2}) étant en outre déterminée dépendante d'une différence de fréquence entre la première fréquence de mesure (f1) et la deuxième fréquence de mesure (f2).

8. Procédé selon l'une des revendications 1 à 7, la première valeur mesurée de capacité (C₁) étant acquise chronologiquement avant la deuxième valeur mesurée de capacité (C₂), ou la deuxième valeur mesurée de capacité (C₂) étant acquises chronologiquement avant la première valeur mesurée de capacité (C₁).

9. Procédé selon l'une des revendications 1 à 8, la première et la deuxième valeur mesurée de capacité (C₁, C₂) étant mesurée à l'aide d'une mesure de transfert de charge, la mesure de transfert de charge étant effectuée par commutation de courants de charge vers et depuis l'au moins une électrode de mesure (3) à l'aide d'un signal d'excitation pulsé, le signal d'excitation (A) possédant une fréquence de cycle et un rapport cyclique, les fréquences de cycle étant fournies en tant que première et deuxième fréquence de mesure (f1, f2).

10. Procédé selon l'une des revendications 1 à 9, la première et la deuxième valeur mesurée de capacité (C₁, C₂) étant mesurée à l'aide d'une mesure de transfert de charge, la mesure de transfert de charge étant effectuée par commutation de courants de charge vers et depuis l'au moins une électrode de mesure (3) à l'aide d'un signal d'excitation pulsé, le signal d'excitation (A) possédant une fréquence de cycle et un rapport cyclique, la première fréquence de mesure (f1) étant respectivement fournie sous la forme d'un signal d'excitation (A) modulé par un premier rapport cyclique et la deuxième fréquence de mesure (f2) sous la forme d'un signal d'excitation modulé par un deuxième rapport cyclique, le premier rapport cyclique se trouvant plus proche d'un rapport cyclique de 50 % que le deuxième rapport cyclique.

11. Dispositif, comprenant un capteur de niveau de remplissage (2) pourvu d'au moins une électrode de mesure (3), laquelle définit un seuil de niveau de remplissage (S) sur une paroi de récipient (4) d'un récipient (5), et une unité d'interprétation (7), qui est configurée pour mettre en œuvre un procédé selon l'une des revendications 1 à 10.
